# EUROPEAN PATENT APPLICATION

(11) **EP 2 275 317 A1**
(43) Date of publication of application: **19.01.2011**
(21) Application number: 10005113.5
(22) Date of filing: 15.05.2010
(51) Int. Cl.: B60W 20/00

(54) **Vehicle range finder**

(30) Priority: 17.07.2009 US 504810
(71) Applicant: Celadon Applications, LLC, Iowa City IA 52244 (US)
(72) Inventor: Pease, Karen, Iowa City Iowa 52244 (US)
(74) Representative: Bawden, Peter Charles

(57) **Abstract**

The present invention includes, among other embodiments, a system embedded in a vehicle including several inputs. The inputs may include one hard coded data, data from sensors on the vehicle, data from external sensors, user coded data, data received from remote databases, data received from broadcast data steams or data that has been accumulated during use of the vehicle. The inputs provide information regarding vehicle speed, motor rpm, motor torque, battery voltage, battery current, and battery charge level, etc. The embedded system also includes a processor unit that receives information from the plurality of inputs and calculates at least an expected vehicle range. The results of any calculations completed by the processing unit is supplied as an output to a display unit, which then displays the information to the user.

## Description

### Field of the Invention

The present invention relates to devices, systems and methods for estimating the real time range of vehicle, and more particularly, for estimating the range of a vehicle taking into account internal and external conditions that affect the distance a vehicle can travel.

### Background of the Invention

Consumers are generally comfortable with being only able to make a rough guess about how many more miles they can travel in a gasoline vehicle before refueling is required. The vehicle's long range, ubiquitous fueling stations, rapid refueling times, and portable fuel mean that misjudging distance is unlikely and generally carries acceptable consequences. Alternative fuel vehicles on the other hand frequently suffer from short ranges, long distances between fueling stations, long refill times, and/or fuels that are not readily carried. This makes running out of fuel both more likely and more problematic. A "rough guess", while generally acceptable for a gasoline vehicle, is generally insufficient for drivers of alternative fuel vehicles. Weather, terrain, driving style, and other factors can alter the range of any vehicle, and the shorter the range, the greater the likely error. For example, in an electric or hybrid vehicle climbing a hill, the battery will drain quickly (causing the gauge to drop), but the battery may recharge on the downhill (e.g. through regenerative braking). Thus, the consumer cannot accurately determine how far they can travel until refueling or recharging is required. For electric vehicles, this is especially critical because the amount of energy batteries can store is limited compared to a gasoline vehicle, so the room for error is limited. Moreover, the systems of the vehicle may also contribute errors further complicating the customers' task of estimating when refueling or recharging is needed. For example, by not knowing the anticipated terrain, a hybrid vehicle may start its generator too late (after beginning a steep accent) or too early (just before reaching the desired destination). The present invention overcomes one or more of these problems.

### Summary of the Invention

The present invention includes, among other embodiments, a system embedded in a vehicle including several inputs. The inputs may include one hard coded data, data from sensors on the vehicle, data from external sensors, user coded data, data received from remote databases, data received from broadcast data steams or data that has been accumulated during use of the vehicle. The inputs provide information regarding vehicle speed, motor rpm, motor torque, battery voltage, battery current, and battery charge level, etc. The embedded system also includes a processor unit that receives information from the plurality of inputs and calculates at least an expected vehicle range. The results of any calculations completed by the processing unit is supplied as an output to a display unit, which then display the information to the user, or provides the information to other vehicle subsystems.

### Brief Description of the Drawings

In the drawings:
Fig. 1 schematically shows one embodiment of the present invention.
Fig. 2 schematically shows the methods of the present invention used in an electric vehicle.
Fig. 3 schematically shows the methods of the present invention used in a hybrid or chemical fuel only vehicle.

### Detailed Description

The invention includes devices, systems and methods for determining how far a vehicle can travel before refueling is required; that is, the expected range of a vehicle. The invention can be used with any type of vehicle but is most useful for motorized ground transportation such as automobiles, trucks and the like. Suitable vehicles may use internal combustion engines, electric motors or combinations thereof and "motor" is used herein to refer to internal combustion engines, electric motors, devices that combine engines and motors and vehicles with separate engines and motors. Fuel for suitable vehicles includes chemical fuel (e.g. gasoline, diesel, natural gas, hydrogen, etc.), electricity or combinations thereof and "charge" is used herein to refer chemical fuel, electricity and combination of fuel and electricity used in a vehicle. "Charge level" is used to describe the remaining amount of energy stored in the vehicle, whether in a battery or a fuel tank. "Recharging" and "charging" are used to describe the process of replenishing the energy stored on the vehicle. Recharging and charging, then, encompass refueling as well as replenishing the charge in batteries. Exemplary batteries include devices that store electrochemical energy. Devices, such as capacitors, that store electrical energy are also encompassed by the term battery. Preferably, the batteries used in the present invention are rechargeable.

### Overview of the invention

The methods of the present invention include calculating the expected range of a vehicle. This includes gathering initial information about the existing condition of the vehicle and the vehicle's surroundings, calculating the existing efficiency of the vehicle, and monitoring the charge level of the vehicle. This method may also include updating the user on the remaining charge and/or the expected range of a vehicle. The methods may also include comparing the remaining charge and/or the expected range of a vehicle with the intended destination and determining whether the vehicle is able to continue to the destination on the remaining charge. The methods may also include identifying the closest recharging station to vehicle and displaying this information to the user. The methods may also include controlling vehicle systems, such as starting or stopping a generator in a hybrid vehicle or reducing or eliminating energy consumption by accessories, based on the anticipated power consumption on the desired route.

The devices and systems of the present invention implement the methods discussed above and include a plurality of inputs, a backend and a frontend. Generally, the backend processes the information provided by the inputs and sends information to be displayed by the frontend.

### Exemplary embodiments

In a first embodiment, the methods of the present invention are embedded within devices and systems in a vehicle. This generally means that the devices and systems are sold as OEM equipment of the vehicle and carry out the inventive methods. The degree of integration of the embedded devices and systems is variable. On the one hand, the system may be installed during the manufacture of the vehicle and requires little installation afterward and only minor amounts of initialization by the user of the vehicle. On the other hand, only some of the components may be installed during the manufacture of the vehicle; for example, the inputs and the backend. Here, the user would provide an aftermarket frontend, that may be permanently or temporary connected to the other components and/or the vehicle. Other arrangements are also contemplated where some components are installed during vehicle manufacture and other components are connected at a later point in time.

In a second embodiment, the devices and systems using the methods of the present invention standalone from the vehicle. This generally means that the devices and systems are sold as aftermarket equipment for the vehicle. No integration with the vehicle would be required, although some integration could be possible. Standalone devices and systems may incorporate all of the inputs, backend and frontend into a single unit (e.g. like a navigation unit), or the standalone devices and systems may spread the components across several devices (e.g. a backend unit and a frontend unit).

In a third embodiment, the methods of the present invention are incorporated into software executed on a general purpose computing platform, whether the platform is a client-server arrangement, a workstation, a laptop, a netbook, a PDA, a mobile phone or other device or arrangement that include a processor, memory, storage, communications, a display, or combinations thereof.

In another embodiment, the present invention is a software application including one or more inputs related to destination, route, vehicle model, driver profile or combinations thereof, a backend module that receives the inputs and calculates an expected vehicle range; and a frontend module that displays the expected vehicle range to a user.

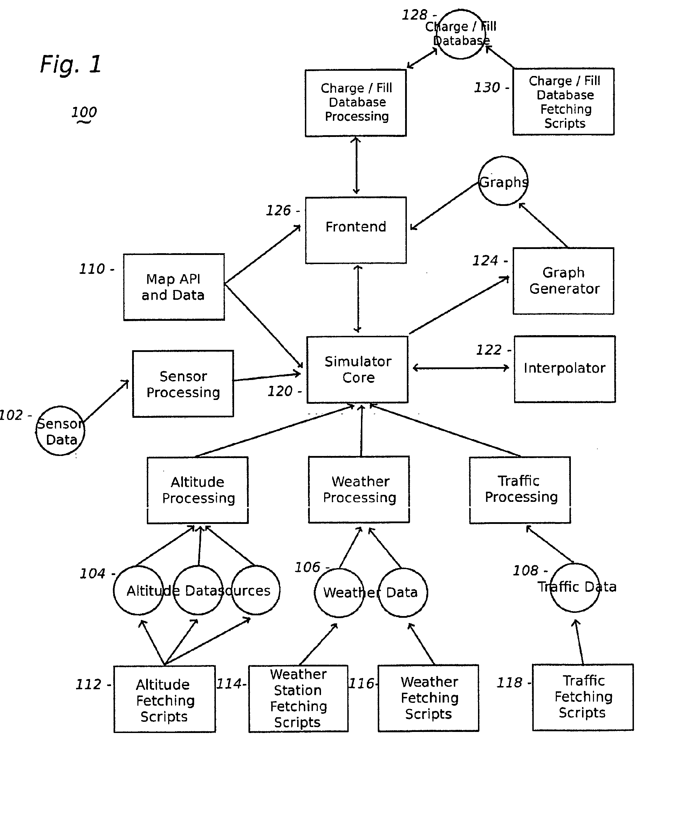

Fig. 1 shows a schematic of one embodiment of the present invention. For a device or system 100, the inputs may include sensor data (and associated processing) 102 as well altitude data 104, weather data 106, traffic data 108, map data 110. Any associated processing with retrieving or making calculations with this data maybe accomplished by the backend. The altitude data, weather data and traffic data are retrieved from external or remote databases by a series of scripts 112-118 that fetch the desired data. The inputs pass data to the simulator core or processor unit 120, which forms the heart of the backend. The processor unit calculates the expected range of the vehicle, distances to a plurality of recharging stations, etc., preferably through the use of an interpolator 122. The backend may also include a graph generator 124. Information from the backend is output to the frontend 126. The frontend primarily displays information to the user(s). The displayed information typically is supplied by the backend but it may come from other sources as well, such as map data 110. In addition, data regarding the location of recharging stations 128 may be displayed on the frontend. The recharging station location data are retrieved from external or remote databases by a series of scripts 130 that fetch the desired data. Any associated processing with retrieving or making calculations with this data maybe accomplished by the backend.

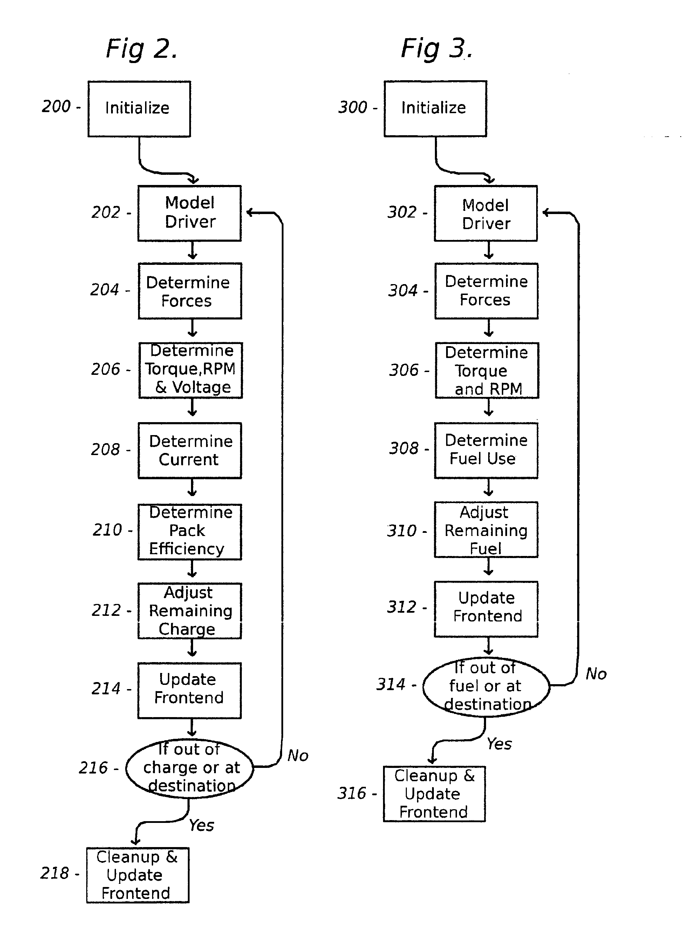

Fig. 2 shows a flow chart of the method steps of the expected vehicle range determination in an electric vehicle. Stated alternatively, this figure shows the steps used in simulating the vehicles travel over the desired route and provides an estimate of where and when the vehicle will run out of charge. Initialization 200 includes obtaining data from the inputs such as vehicle type, destination, route, etc. Modeling the driver 202 includes obtaining information about the driving style of the user or applying correction factors to previously obtained data to incorporate driving style (e.g. aggressiveness) into the calculation. Determining the forces on the vehicle 204 includes calculating the parameters that are the basis for calculating the torque of the motor. Determining the torque, RPM and battery voltage 206 includes calculating each of these parameters of the efficiency of the vehicle. Determining the current 208 includes interpolating between known current datapoints at given torques, RPMs, and voltages. Determining the pack efficiency 210 includes calculating the battery pack efficiency. Adjusting the remaining charge 212 includes subtracting the efficiency-adjusted work (current times voltage times duration divided by efficiency) from the charge level. This also is when the expected range of the vehicle is calculated. When charge drops below zero, the vehicle has run out, and that's as far as you can go along that route. Updating the frontend 214 includes sending an output from the backend. Destination check 216 includes deciding whether to repeat the process or to exit and update the frontend 218. Although these steps are shown as separated, it should be understood that two or more of these steps could be combined into one step. Likewise, it should be understood that any one of these steps could be broken down into smaller steps, such as breaking the determination of current into a step to calculate drivetrain losses and a step to calculate motor/inverter losses. Likewise, although these steps are shown sequentially, it should be understood that some or all of these steps could be completed in parallel with one another or that several simulations could be carried out in parallel, such as using common starting points and different destinations or using common a starting point and destination with several different routes to determine which route is the mostly likely to allow the user to arrive at the destination without recharging.

Fig. 3 shows a flow chart of the method steps of the expected vehicle range determination in a chemical fuel vehicle. The reference numerals in this figure generally correspond to the reference numerals in Fig. 2. With a chemical fuel vehicle. The battery voltage need not be calculated nor does the efficiency of the battery pack matter, since these are minor and can be considered to be factors of the drivetrain's efficiency, so these steps or portions of steps are unnecessary.

For a hybrid vehicle, the method shown in Figs. 2 and 3 are used in combination to determine the expected range of the vehicle.

### Methods of calculating the expected range of the vehicle

The methods of the present invention include determining the distance until depletion of charge or fuel; that is, the expected range of the vehicle. In a simulation mode, the expected range calculation is completed before the user begins their journey to the desired destination or at some point before the user reaches their destination. In this mode, the methods simulate how the vehicle would operate over the desired route to the selected destination while taking into account some or all of the steps and parameters discussed below. In this way, forecasted changes in weather conditions (e.g. a change in wind direction and speed) or changes in road conditions (e.g. an elevation gain), differing vehicle speeds and the like can be taken into account in the calculation of the expected range. These future conditions may be treated as parameters in the calculation of the vehicle efficiency.

In a real-time mode, the expected range calculation is re-run during the journey in order to take into account changes in parameters discussed below or to confirm that no significant change in parameters has occurred. The re-run of the calculation may be made at defined time or distance intervals or at significant changes (e.g. greater than 5%) in one or more of the parameters discussed below. The re-run may also occur at geographically significant locations such as road intersections, changes in jurisdiction (related changes in speed limit), etc. To some degree, the frequency of rerunning the calculation is dependent on the computing power that is available.

Both simulation and real-time modes use the same general set of steps to calculate the expected range of the vehicle. From the users' perspective, there is likely to be little noticeable difference between the two modes.

In both modes, calculating the expected range of the vehicle includes repeatedly applying one basic operation; that is, subtracting the existing energy needs of the vehicle from the charge level and diving by the efficiency of the vehicle at that moment in time, and doing this for each moment of time that will exist along the user's chosen route. In both modes, the charge level is adjusted based on the distance traveled at the calculated vehicle efficiency. The method is repeated after incrementing by the distance to be traveled (in simulation mode) or the distance traveled (in real time mode). The calculation ends when a moment in time along the route is considered and the charge level is less than the vehicle's minimum charge level. That is, the extent of the vehicle's range is reached at that point in time when the charge level of the charge level of the vehicle is zero.

Known data-points used as the starting point of the interpolation discussed below may come from the manufactures specifications or from how similar makes and models of the relevant components perform under real world conditions. Information about the parameters used in the calculations and interpolation discussed below may come from hard coded data, data from sensors on the vehicle, data from external sensors, user coded data, data received from remote databases, data received from broadcast data steams or data that has been accumulated over time through the operation of other portions of the invention. For example, how fast the driver tends to accelerate under a given set of conditions may be stored, and when the simulation predicts that those same conditions will occur, it will predict that the driver will accelerate at a similar speed.

### Charge Level

The charge level may be monitored thorough any technique that provides reasonable reliable information about the charge level may be used in the present methods. This includes a variety of sensors that provide this information or calculated information based on a known starting charge level followed by interpolation, as discussed below.

### Calculating the efficiency of the vehicle

Calculating the efficiency of the vehicle includes, in the case of electric vehicles, calculating the efficiency of the battery pack and calculating the efficiency of the drivetrain. Multiplying these two aspects together gives the existing efficiency of the vehicle. In practice, this is most readily utilized by calculating the current drawn by the drivetrain (see "Calculating the efficiency of the drivetrain"), and then (after accessory loads are added to the current), dividing the current by the efficiency of the battery pack. This yields the current being used by the vehicle, adjusted by the efficiency of the vehicle.

### Calculating the efficiency of the battery pack

For electric-drive vehicles, the efficiency of the battery pack can be interpolated from known battery pack efficiency data-points. Furthermore, the interpolation includes taking into account a variety of parameters, which may include but are not limited to the following parameters: ambient temperature, charge level, battery pack degradation, and current draw from the battery

For chemical fuel vehicles, the efficiency of their fuel tank can be considered to be 100% unless there are relevant losses associated with extracting fuel from the tank.

### Calculating the efficiency of the drivetrain

Calculating the efficiency of the drivetrain includes first determining several parameters including, at least, the motor rpm, the motor torque and the existing condition of the vehicle, such as battery voltage These parameters are provided to the interpolator along with a number of known datapoints for the drivetrain, and the interpolator yields the desired value, which may the efficiency itself or the efficiency-scaled current, power, or fuel consumption.

### Battery Voltage

For electric-drive vehicles, the voltage at the drivetrain is approximately the battery voltage. For chemical fuel vehicles, the battery is so small and it's interactions with the rest of the vehicle create little variation in efficiency, it is easiest to factor in any inefficiencies with the battery into the drivetrain itself. For hybrid vehicles, both paths are taken at once; that is, considering what is happening with the gasoline drivetrain and what is happening with the electric drivetrain, each treated separately. The battery voltage can be interpolated from known battery voltage data-points. Furthermore, the interpolation includes taking into account some or all of the following parameters: ambient temperature and charge level.

### Motor rpm

The rpm of a motor is directly proportional to the vehicle's speed and its gear ratio. The motor rpm can be measured directly during the journey (in real-time mode) or by modeling the transmission using interpolation (in both modes). The gear ratio can be interpolated from known gear ratio data-points. Furthermore, the interpolation includes taking into account some or all of the following parameters: vehicle speed and motor torque

### Motor torque

The torque on the motor is the most involved parameter to determine. There are four primary parameters which influence the amount of torque on the motor: aerodynamic drag, rolling drag, gravity drag and acceleration. The motor torque is the sum of these parameters (with the signs on drag forces opposed to that of acceleration) multiplied by the effective shaft length (gear ratio / (2 * Pi)).

### Aerodynamic drag

Aerodynamic drag comes from air hitting the vehicle. The mass density of the air is first calculated by:
1.29 kg/m^3 * (CurrentAirPressure / 101,325Pa) * (CurrentTemperature / 273.15K), where CurrentAirPressure is in pascals and CurrentTemperature is in kelvins. The wind is then rotated into the vehicle's coordinate frame and broken down into a "horizontal" (crosswind) and "vertical" (headwind/tailwind) component, as:
   AirflowX = -VehicleSpeed * sin(VehicleDirection) - WindSpeed * sin(WindDirection);
   AirflowY = -VehicleSpeed * cos(VehicleDirection) - WindSpeed * cos(WindDirection);
   HorizontalFlow = AirflowX * cos(-VehicleDirection) + AirflowY * sin(-VehideDirection);
   VerticalFlow = AirflowY * cos(-VehicleDirection) - AirflowX * sin(-VehicleDirection);
      where VehicleSpeed is in meters per second and both VehicleDirection and WindDirection are in radians. Total aerodynamic drag, then, can be calculated by: 0.5
      * MassDensity * (DragArea + DragArealncreaseWithCrosswinds * fabs(HorizontalFlow)) *pow(VerticalFlow , 2.0), where DragArea is in square meters and DragArealncreaseWithCrosswinds is a unitless parameter. The results of this equation need to be sign corrected to account for the direction of the VerticalFlow.

A more sophisticated way to calculate aerodynamic drag is to perform a full CFD computational fluid dynamics (CFD) simulation; colloquially known as virtual wind tunnel simulation. This will generally be prohibitive from a computational power and time perspective, but may be appropriate in the future as the cost of computing power continues to drop. An intermediary approach is to cache and interpolate the results of CFD simulations over a variety of parameters, such as temperature, pressure, a wind vector relative to the vehicle, and so forth. Also, the interaction between drag area and crosswinds can be enhanced with more detailed, deterministic formulae.

### Rolling drag

Rolling drag is perhaps the most difficult drag force to calculate accurately. A rough approximation of rolling drag can be calculated from the formula:
LoadedVehicleMass * 9.81 m/s^2 * TireRollingCoefficient, where LoadedVehicleMass is in kilograms and TireRollingCoefficient is unitless. However, a variety of factors influence this. Increased tire pressure decreases rolling resistance by reducing sidewall and tread flex. Increased temperature decreases rolling drag by raising tire pressure, but also affects hysteresis losses. Speed causes a weak but quadratic-scaled increase in rolling drag due to standing waves that build up in tires at high speeds, which is generally larger than the opposing effect of increased tire temperature (and thus pressure) at high speeds. Tire pressure increases over time with driving, thus lowering rolling drag, due to the rise in tire temperature as they are used. Wet roads increase rolling drag, partially due to the displacement of water, but primarily due to evaporative cooling on the surface of the tires, reducing internal pressure. Bad roads increase suspension losses, which are generally lumped in with rolling drag. The degree to which all of these factors need to be modeled depends on the accuracy the product requires, and is best modeled by creating polynomial formulae (ax + bx^2 + cx^3....) that fit a known set of real-world data rather than deriving them from general physics

### Gravity drag

Gravity drag is defined as: 9.81m/s^2 * LoadedVehicleMass * sin(SurfaceSlope), where LoadedVehicleMass is in kilograms and SurfaceSlope is in radians. The force, while often quite large in rough terrain, is equally as likely to be positive as negative. Calculating SurfaceSlope requires knowing the topography of the terrain. This can be determined either from the route data containing altitude data-points from its data source, the route data containing slope data from its data source, or from linear interpolation across a grid of altitude data-points, such as the National Elevation Dataset or the Shuttle Radar Topography Mission datasets. Incongruities, such as misalignment of road data with altitude data, tunnels through mountains, and bridges over gorges, can lead to erroneous calculation of extreme slopes. Such errors must be detected and corrected. For such massive amounts of data to be processed rapidly in real-time requires breaking the data into compressed blocks and maintaining a caching algorithm. Each block must overlap its neighbors to allow for proper interpolation. Vertical resolution should ideally be better than 100 times the horizontal resolution to ensure reasonable calculation of slopes.

### Acceleration

Acceleration force can be either positive or negative, depending on whether the driver is accelerating or decelerating; however, acceleration force from friction brakes do not contribute to the forces on the drivetrain. Acceleration is preferably not calculated but modeled. First, a target speed is selected, and from there, the driver model (i.e. a measure of the aggressiveness of the driver) is used to determine how fast the driver attempts to reach the target speed. The target speed fluctuates around combination of the speed limit, how fast the driver wishes to drive relative to the speed limit, how the speed limit, how fast the driver is willing to drive, whether there are any known intersections or traffic control devices along the route, live traffic data, and other parameters. The fluctuation is ideally based on a superposition of sines modeled after the EPA's FTP and US06 drivecycles, the NEDC, or any other internationally recognized drivecycles.

Thus, summed together, these four parameters comprise the net force on the vehicle. The net force on the vehicle multiplied by the effective shaft length gives the motor torque. The effective shaft length is the vehicle speed divided by the motor speed, all divided by 2Pi. Vehicle speed divided by the motor speed is also called the gear ratio.

The net force on the vehicle can optionally be compared with the maximum safe traction the tires are capable of under the current conditions, and if this value is exceeded, the acceleration can be reduced to the point where the vehicle will remain under control.

### Existing condition of the vehicle

The existing condition of the vehicle encompasses other parameters that influence drivetrain energy consumption and represent accessory and parasitic loads on the vehicle. These are often related to the amount of current on the electrical system of the vehicle. For example, operating the entertainment system of the vehicle will draw current that could otherwise be used by the battery pack or drivetrain to move the vehicle forward. Other parameters include current draw of vehicle accessories (like the headlights), climate control settings of the vehicle, solar illumination on the vehicle's solar panels (if present), and so forth. These accessory currents are added to the drivetrain current in an electric vehicle, or increase the amount of torque the engine needs to exert in a gasoline vehicle due to the increased alternator loads. The existing condition of the vehicle, then, is the cumulative effect of all the existing parameters. The more parameters that are utilized, the more precise and accurate the energy consumption of the vehicle will be. This in turn will lead to a more precise and accurate determination of the expected range of the vehicle.

The current or fuel needed to run the drivetrain under the existing conditions is calculated via interpolation, as described below. If interpolation finds that the existing conditions are out of the bounds that the drivetrain is capable of, the torque is repeatedly reduced (along with all other parameters related to torque, including acceleration) until a set of in-range conditions is produced. This situation primarily occurs when the driver attempts to accelerate harder than the vehicle is capable of. Interpolation

Several of the parameters in the determination of the efficiency of the drivetrain are more accurately determined by interpolation. Interpolation is an iterative process in which a calculation is conducted repeated in an attempt to locate a local or global minimum or maximum. Interpolating uses data-points that can come from brake-specific fuel consumption charts, other similar efficiency or consumption graphs, laboratory testing to determine known data-points, or estimation based on real-world driving data. Each data-point can be viewed as a point in N-space, where N is the number of parameters available for each data-point (such as motor rpm, motor torque, battery voltage, battery current or efficiency. Because there is a physics relationship between all of the parameters, the parameters can be arranges in any order or relationship. If the known data-points are evenly spaced or spaced by some known geometry, the calculated energy consumption can be derived by linear interpolation. If the known data-points are uneven, the data-points must be arranged into an interconnected mesh of N-1-hedrons in N-space. That is, if there are three parameters available for each data-point, the data-points must be arranged into an interconnected mesh of triangles in 3D space, while if there are four parameters available, it becomes an interconnected mesh of tetrahedra in 4D space. These can be built up by a variety of algorithms which have been widely studied for the 3D space case (and can be adapted for higher dimensions), including Marching Cubes, Marching Triangles, and Ball Pivoting. Once the mesh exists, the data-point the algorithm is attempting to look up can be tested to see which element contains it, and from there, linearly interpolate between the energy consumption of that element's vertices to get the energy consumption.

To reduce the increasing complexity with an increasing number of dimensions, the problem can be reduced by subdividing data-points into "layers". For example, in the case of four parameters per data-point - motor rpm, motor torque, battery voltage, and battery current which are not evenly spaced - the dimensional complexity can be reduced by requiring that voltages be grouped into layers wherein all data-points in each layer share the same voltage. This allows the point cloud of that layer to be developed into a mesh of triangles in 3D space, which is much easier to deal with mathematically and conceptually than a mesh of tetrahedra in 4D space. In the given example, linear interpolation can be used between the current in the closest layer with the voltage higher than that of the data-point and the current in the closest layer with a voltage lower than that of the data-point.

Energy consumption (i.e. the amount of power being drained from the battery) can be represented in two equally valid ways. In one approach, one can directly list the energy consumption under various conditions (rpm, torque, etc). This has the strength of being able to provide reasonable numbers at boundary conditions, such as zero RPM or torque, but has the disadvantage of interpolating poorly due to nonlinear scaling factors between data-points. In a second approach, one can list the efficiency under various conditions. This scales well between data-points, but poorly represents boundary conditions. As an example, an electric vehicle performing very mild regenerative braking - a slightly negative torque - may use more power than it regenerates. If a 100% efficient drivetrain would regenerate 100 watts (-100W) but the real-world drivetrain nets using 1 watt (+1W), this yields an unreasonable efficiency number of -10000%, which will throw off any interpolation results with neighboring data-points. An optimal system combines both approaches to find battery current and drivetrain efficiency. Combined approaches are also preferred in other situations where there is a potential for boundary discontinuities.

Ultimately, it is the charge level of the battery that is important and the calculation of expected vehicle is the determination of when the battery is likely to run out. When the battery charge level reaches zero, the distance from the starting location to that point on the route is the expected vehicle range. The method can be summarized as follows: charge level times vehicle efficiency gives the current. Current multiplied by voltage gives the power. Power multiplied by time gives work. Work divided by battery efficiency gives the amount of energy being drained from the battery at that moment. The charge level is updated subtracting that amount from the charge level and calculation is run again. Thus, the simulation calculates the charge level at every point on the route until it is zero, then distance between start point and the charge level zero point is measured to give the expected vehicle range.

### Method of controlling system of the vehicle

In addition, after calculating the expected vehicle range, one or more vehicle systems may be controlled, e.g. turned off, turned down, or emergency power sources utilized in response to the calculation. For example, if the calculation shows that the user is unlikely to reach the desired destination, the entertainment system may be turned off. Likewise, an onboard generator may be started up (and shut down as soon as there is enough power to reach the destination). Any system of the vehicle may be controlled through this including limiting the maximum speed of the vehicle or the maximum acceleration of the vehicle. The system can evaluate its control measures to ensure control measures to ensure that they're sufficient to allow the vehicle to reach its destination, and if not, employ stricter measures. If there is no safe way to reach the destination, the system could give the user the option to alert a tow truck or emergency vehicle before they even become stranded.

### Methods of alerting the user

The methods of the present invention also include determining the distance to a plurality of recharging stations along a route and alerting the user when the distance until the battery charge is depleted (Do) is greater than the distance to closest recharging station (D_{rc1}) but less than the distance to the second closest recharging station(D_{rc2}). Stated alternatively, the methods calculate the situation where R_{rc2} > D₀ > D_{rc1}. This is the situation where the vehicle is likely to run out of charge before reach the next recharging station and thus likely to strand the user.

### Device and systems

The devices and systems of the present invention include a plurality of inputs, a backend and a frontend.

### Inputs

The inputs can be hard coded data, data from sensors on the vehicle, data from external sensors, user coded data, or data received from remote databases.

The inputs include the vehicle type (e.g. make, model, and/or optional equipment). The vehicle type may be fixed or user-selectable. The vehicle type encompasses a variety of information, including at least weight or mass, aerodynamic drag (drag coefficient, drag area, physical geometry, or similar), tire rolling drag coefficient(s), drivetrain efficiency and/or drivetrain energy consumption in varying situations (such as, but not limited to, various torque, RPM, and voltage levels), gear ratios and under what condition each is used, and in the case of electric-drive vehicles, battery pack voltage under varying situations (such as temperature and remaining charge) and battery pack efficiency under varying situations (such as different current levels). Other optional information encompassed by the vehicle type include the effect of crosswinds on the vehicle's aerodynamic drag, the effect of the use of wipers on the vehicle's aerodynamic drag, power consumption by the vehicle's accessories, power consumption by the climate control under various temperature or difference in temperature conditions, nominal solar panel power rating, solar panel geometry, target tire pressure(s), target tire load rating(s), tire coefficients of friction, number of front and rear wheels, which wheels are driven, weight distribution, maximum vehicle speed, parasitic power consumption, and maximum battery pack current. Depending on the implementation, the user may be empowered to customize the vehicle inputs. The inputs may include data used to determine parameters which are in turn used to model the driver's driving profile. These parameters may include aggressiveness, average speed, top speed, and likelihood of accelerating or decelerating with a given force under various driving conditions. Inputs to calculate these parameters may include accelerator travel, accelerator pressure, brake travel, brake pressure, vehicle speed, and acceleration. The parameters may also be set directly. An input may be available to allow the driver to choose their profile.

The inputs used to model the trip include the route include at least the driver's profile (above), the route, and the initial charge state. Other optional inputs include the date of the trip, payload mass or weight, target speed, target speed relative to the speed limit, maximum speed, tire inflation pressure(s), maximum road grade, road quality, climate control target, occupant tolerance for temperatures warmer or colder than the target, windshield wiper speed, headlight usage, interior light usage, stereo usage, miscellaneous power usage, weather data, traffic data, and terrain. These may be provided by user input or from vehicle sensors.

Weather data may be specified by the user, by sensors or automatically fetched from weather stations, may be fixed or tied to geographic coordinates, and can include but is not limited to temperature, pressure, solar illumination, wind speed, wind direction, precipitation, and humidity. Weather data may optionally be used to predict the enabling or disabling other vehicle inputs, such as headlights or windshield wipers. User coded information may be any of the data discussed above that is provided through user input; for example, the user may input an estimated vehicle speed in order to compared different scenarios. The user may manually modify the defaults coded into a vehicle or may manually modify the vehicle make and model profile for a vehicle. Such user modifications may be entered through the frontend. In the alternative, modifications may be made through a backend configuration file. Data from remote databases may be any of the data discussed above; for example, the current wind direction and speed may be pulled from a web server given the vehicle's current location.

### Backend

Using the provided inputs, the backend uses a processor to determine the expected range of a vehicle; that is, the distance remaining until recharging is required. In addition, the backend may include software, a graphics processor, memory, storage, communications links and/or other hardware. The backend also carries out other functions for the operation of the device or system. The backend generates output that is utilized (e.g. displayed) by the frontend. Besides the expected vehicle range, output from the backend may include projected charge levels, summary trip information, graphs, or other information useful to the user. For example, when the vehicle reaches its destination or runs out of charge, the backend may provide the frontend a general trip summary for it to utilize.

In doing so, the above process is conducted iteratively. The remaining fuel or charge is reduced by the number of joules consumed by the vehicle in that cycle, as determined relative to the current times the voltage in the case of electric vehicles or by fuel consumption in chemical-fueled vehicles. The simulated vehicle speed is adjusted by the acceleration. The frontend may be updated of the results of the calculation, and the backend may generate new graphs for it to utilize. The vehicle advances a number of meters down the road and the calculations repeat.

### Frontend

The frontend utilizes the outputs from the backend and, optionally, maps and databases of additional information to display. The actions of the frontend may include any combination of displaying information for the user (e.g. the distance until the charge is depleted, charge state at different locations along the map, animated street views along the route, etc). In addition, the frontend may use the output from the backend to control vehicle systems (such as starting or stopping a generator in a plug-in hybrid), with control being either direct or through the backend.

The frontend may also display other information such as plotting recharging stations from a database on a map of the route (optionally including, but not limited to, their location, type, contact information, whether it is being used, charge connectors, charging voltage, charging current, charging phase, cord availability and length, cost, user reviews, photographs, and things to do in the area, as well as the ability to comment on or amend the recharging stations). The frontend may display the results from the backend instantaneously or over time, providing the effect of the simulated vehicle driving across the map. The display by the frontend may provide visual, audible, tactile or combination signals to the user. Visual signals include displaying on an LCD, a screen embedded in a vehicle dashboard, a head-ups display, a screen on a mobile phone, PDA or a navigation device (e.g. a GPS unit) or combinations combinations thereof. Audible signals maybe any noise such as a beep or ringtone. Tactile signals maybe any vibrating motion, especially of a mobile phone, PDA or navigation unit.

In addition, the frontend may include one or more user input devices such a touch screen, keypad, mouse, pointing device and the like to solicit information from the user. For example, the user may select a destination and/or a desired route to the destination. The user may be able to drag or modify the route. Further, the user may provide instructions about what kind of information is to be displayed on the frontend. For example, the user may wish to find all free, SAE J1772 recharging stations within ten miles of their route that are well rated by other users. Or the user may wish to see estimated distances to charge depletion based on different vehicle speeds.

Generally, the frontend and backend operate on a client-server model meaning that the server processes information and then returns the results to the client. The client-server model can be implemented through hardware, software and combinations of the two. This allows for flexibility in the arrangement of the components in the devices and system of the present invention. For example, the frontend and backend may be a unitary device where the backend makes the calculations and the frontend displays the results to the user, such as in an OEM or aftermarket device mounted within a vehicle. Here one server is connected to one client and the server and/or the client may be a combination of software modules and hardware components. A distributed version may include a frontend on a mobile phone or laptop and the backend is remotely located such that a single backend is connected to multiple frontends, much like a webserver.

Exemplary embodiments of the present devices and systems include a system embedded in a vehicle. In this embodiment, the vehicle make, model, and options may be hard coded into storage or memory within the vehicle or the embedded system, instructing the backend which weight, motor size, drivetrain efficiency, and other inputs to use. This may be accomplished by either passing data directly from storage on the embedded product, or passing the vehicle make, model, and options to the backend so that it can the necessary data from storage or memory. The backend then calculates the vehicle range and other information which is then passed to the frontend for utilization, such as displaying an alert to the user.

Another exemplary embodiment of the present devices and system include a distributed system utilizing a remote backend and a frontend carried by the user. Route, vehicle type and other information input by the user at the frontend is sent to the backend via a communications link (e.g. wi-fi, cellular or 3G network). The backend calculates the expected vehicle range and returns the results to the frontend for display. One or more sensors in the vehicle may provide data regarding the vehicle speed, battery voltage, the battery current, battery charge level, the ambient temperature, GPS coordinates, etc. to the backend. The backend then calculates the vehicle range and other information which is then passed to the frontend for utilization, such as displaying an alert to the user.

It will be further appreciated that functions or structures of a plurality of components or steps may be combined into a single component or step, or the functions or structures of one-step or component may be split among plural steps or components. The present invention contemplates all of these combinations. Unless stated otherwise, dimensions and geometries of the various structures depicted herein are not intended to be restrictive of the invention, and other dimensions or geometries are possible. Plural structural components or steps can be provided by a single integrated structure or step. Alternatively, a single integrated structure or step might be divided into separate plural components or steps. In addition, while a feature of the present invention may have been described in the context of only one of the illustrated embodiments, such feature may be combined with one or more other features of other embodiments, for any given application. It will also be appreciated from the above that the fabrication of the unique structures herein and the operation thereof also constitute methods in accordance with the present invention. The present invention also encompasses intermediate and end products resulting from the practice of the methods herein. The use of "comprising" or "including" also contemplates embodiments that "consist essentially of" or "consist of" the recited feature.

The explanations and illustrations presented herein are intended to acquaint others skilled in the art with the invention, its principles, and its practical application. Those skilled in the art may adapt and apply the invention in its numerous forms, as may be best suited to the requirements of a particular use. Accordingly, the specific embodiments of the present invention as set forth are not intended as being exhaustive or limiting of the invention. The scope of the invention should, therefore, be determined not with reference to the above description, but should instead be determined with reference to the appended claims, along with the full scope of equivalents to which such claims are entitled. The disclosures of all articles and references, including patent applications and publications, are incorporated by reference for all purposes.

## Claims

1. A system embedded in a vehicle, comprising:
a plurality of inputs including one or more of hard coded data, data from sensors on the vehicle, data from external sensors, user coded data, data received from remote databases, data received from broadcast data steams or
data that has been accumulated or combinations thereof that provide information regarding one or more of vehicle speed, motor rpm, motor torque, battery voltage, battery current, and battery charge level;
a processor unit connected to the plurality of inputs, wherein the processing unit calculates, from the processor inputs, an expected vehicle range as an output; and
a display unit connected to the processor unit, wherein the display unit displays the output from the processor unit.

2. The system of claim 1, wherein the inputs further provide data regarding one or more of vehicle route, vehicle destination, charge consumption, fuel consumption, ambient temperature, ambient pressure, wind speed, wind direction, tire pressure, throttle travel, brake travel, brake pressure, GPS position and altitude, battery pack temperature, accessory current, payload weight, road quality, climate control settings, solar illumination, gear ratio, recharging station location or combinations thereof.

3. The system of claim 2 wherein the vehicle route includes a starting location of a vehicle, a destination of the vehicle, a plurality of elevation changes between the starting location and the destination, current ambient weather conditions between the starting location and the destination and combinations thereof.

4. The system of any of the preceding claims wherein the processor unit further calculates a first distance from the vehicle to the closest recharging station; calculates a second distance to the next closest recharging station; compares the first distance and the second distance to expected vehicle range; and if the expected vehicle range is less than the second distance and greater than the first distance, then creates an output from the processing unit.

5. The system of any of the preceding claims wherein the processor unit compares the expected vehicle range to a distance to the vehicle destination, and if the expected vehicle range is less than the distance to the vehicle destination, then creates an output from the processing unit.

6. A system for determining the expected range of a vehicle, comprising:
one or more inputs regarding destination, route, vehicle model, driver profile and combinations thereof;
a backend module that receives the inputs and calculates an expected vehicle range; and
a frontend module that displays the expected vehicle range to a user.

7. The system according to claim 6 wherein the backend module also receives inputs from one or more sensors.

8. The system according to claim 6 or claim 7 wherein the frontend module is used to control vehicle subsystems.

9. The system according to any of claims 6 to 8 wherein the frontend module also receives input from one or more remote databases.

10. The system according to any of claims 6 to 9 wherein the frontend module calculates the distance to a plurality of recharging stations.

11. The system according to any of claims 6 to 10 wherein the frontend module generates an alert when the expected vehicle range is greater than the distance to a closest recharging station and less then the distance to a next closest recharging station.

12. The system according to any of claims 6 to 11 wherein the frontend module displays one or more recharging stations.

13. The system according to any of claims 6 to 12 wherein the frontend module enables users to gather information about, comment on, amend information about, or create entries for recharging stations.
